(19)

**Europäisches Patentamt**
**European Patent Office**
**Office européen des brevets**

(11) **EP 4 566 738 A1**

(12) **EUROPEAN PATENT APPLICATION**
published in accordance with Art. 153(4) EPC

(43) Date of publication:
**11.06.2025 Bulletin 2025/24**

(21) Application number: **22954421.8**

(22) Date of filing: **10.08.2022**

(51) International Patent Classification (IPC):
**B21D 53/02** (2006.01)   **B23P 15/26** (2006.01)

(52) Cooperative Patent Classification (CPC):
**B21D 53/02; B23P 15/26**

(86) International application number:
**PCT/CN2022/111492**

(87) International publication number:
**WO 2024/031446 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **QIN, Lun**
 **Ningde, Fujian 352100 (CN)**
• **WANG, Qing**
 **Ningde, Fujian 352100 (CN)**
• **YANG, Hui**
 **Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **THERMAL MANAGEMENT COMPONENT, MANUFACTURING METHOD THEREFOR,
BATTERY, AND ELECTRICAL DEVICE**

(57)    The present disclosure provides a hot management component and manufacturing method thereof, a battery, and an electric device, relating to the field of battery technology. The hot management component comprises a main body part and a shielding member. The main body part is bent to form multiple connecting regions, and the multiple connecting regions are connected sequentially to form an accommodating space for accommodating battery cells. The connection position of two adjacent connecting regions forms a corner region, and an interior of the main body part is provided with a medium channel passing through the corner region. An Opening is provided at a position corresponding to the medium channel on a side of the corner region away from the accommodating space, and the opening is in communication with the medium channel. The shielding member is connected to the main body part so as to seal the openings. The structure of the hot management component, when bending the main body part, alleviates the significant tension in the corner region of the main body part through the opening. This is beneficial to reduce the risk of breakage or collapse in the corner area of the main body part, ensuring the yield of the hot management component. Moreover, it ensures the height of the medium channel passing through the corner region so as to facilitate the permeability of the refrigerant.

FIG. 5

## Description

## Technical Field

The present disclosure relates to the technical field of batteries, in particular to a hot management component and manufacturing method thereof, a battery, and an electric device.

## Background Art

In recent years, new energy vehicles have experienced a leapfrog development. In the field of electric vehicles, power batteries serve as the energy source for electric vehicles and play an irreplaceable important role. The battery consists of a box and multiple battery cells accommodated within the box. The battery, as the core component of new energy vehicles, has high requirements in terms of both safety and service life. However, during the continuous charging and discharging process, the battery cells inside the battery generate a large amount of heat, leading to a rapid increase in the internal temperature of the battery. This significantly affects the performance and lifespan of the battery, and may even pose significant safety hazards during use, which is not conducive to consumer use safety.

## Summary

The embodiments of the present disclosure provide a hot management component and manufacturing method thereof, a battery and an electric device, which are capable of effectively enhancing the safety and lifespan of the battery in use.

In the first aspect, the embodiments of the present disclosure provide a hot management component comprising a main body part and a shielding member. The main body part is bent to form multiple connecting regions, and the multiple connecting regions are connected sequentially to form an accommodating space for accommodating battery cells. The connection position of two adjacent connecting regions forms a corner region, and an interior of the main body part is provided with a medium channel passing through the corner region. An Opening is provided at a position corresponding to the medium channel on a side of the corner region away from the accommodating space, and the opening is in communication with the medium channel. The shielding member is connected to the main body part and seals the opening.

In the above technical solution, by bending the main body part of the hot management component to form multiple connecting regions and forming the corner region at the connection positions of two adjacent connecting regions, the connecting regions and corner region together define the accommodating space for accommodating battery cells, which allows the main body part of the hot management component to have multiple connecting regions that can be in contact with the battery cells. This effectively increases the heat exchange area between the hot management component and the battery cells so as to improve the heat exchange efficiency of the hot management component. On one hand, it enables effective heat dissipation from the battery cells, reducing safety issues of the battery such as thermal spread or thermal runaway. On the other hand, when multiple battery cells are arranged in the accommodating space of the hot management component, it can reduce the temperature difference between the multiple battery cells, thereby reducing the impact on the lifespan of the battery cells. This, in turn, contributes to enhancing the safety and lifespan of the battery. Additionally, on the side of the corner region away from the accommodating space and corresponding to the position where the medium channel is arranged, the opening is provided. The opening is sealed by a separate shielding member so as to allow the opening to relieve the significant tension generated by the corner region of the main body part, which occurs during the bending of the main body part to form the corner region in the production process of the hot management component. This helps to mitigate the risk of the corner region of the main body breaking or collapsing, thus ensuring the production quality and yield of the hot management component. The structure of sealing the opening with the shielding member also ensures the height of the medium channel passing through the corner region, thereby enhancing the permeability of the refrigerant in the medium channel to ensure the heat exchange capacity of the hot management component.

In some embodiments, multiple connecting regions include a first connecting region, a second connecting region, and a third connecting region, wherein the first connecting region and the third connecting region are arranged opposite to each other, and the second connecting region connects the first connecting region and the third connecting region.

In the above technical solution, the main body part of the hot management component forms three connecting regions, namely the sequentially connected first connecting region, the second connecting region, and the third connecting region. The first connecting region and the third connecting region are arranged opposite to each other so that the main body part of the hot management component is formed into a structure resembling a "U" shape. The hot management component, using the structure, can be in contact with three different surfaces of the battery cell housed in the accommodating space, which increases the heat exchange area between the hot management component and the battery cell and effectively enhances the heat management capability for the battery cells.

In some embodiments, the adjacent two connecting regions are mutually perpendicular.

In the above technical solution, by arranging the adjacent two connecting regions in a mutually perpendicular structure, it facilitates the mutual fitting of the main body part with different surfaces of the battery cell. On one hand, it is convenient to assemble the battery cell into the accommodating space of the main body part. On the other hand, it effectively increases the contact area between the hot management component and the battery cell.

In some embodiments, the main body part is provided with an outer surface, and the opening is provided on the outer surface. The shielding member fits onto the outer surface.

In the above technical solution, the opening is provided on the outer surface of the main body part, meaning that the side of the main body part away from the accommodating space is the outer surface of the main body part. This allows the opening to be provided on the outer surface of the main body part. By fitting the shielding member onto the outer surface of the main body part, the hot management component with the structure is conducive to enhancing the sealing effect of the shielding member on the opening. Additionally, it facilitates the connection of the shielding member to the main body part, thus reducing processing difficulty. Moreover, it effectively increases the connecting area between the shielding member and the main body part, thereby promoting the stability and reliability of the connection between the shielding member and the main body part.

In some embodiments, a width of a portion of the shielding member that extends beyond the edge of the opening is denoted as $D_1$, which satisfies $6mm \leq D_1 \leq 15mm$.

In the above technical solution, by setting the width of the portion of the shielding member that extends beyond the edge of the opening to be within the range of 6mm to 15mm, it means that the overlap dimension between the shielding member and the outer surface of the main body part is in the range of 6mm to 15mm. This structure, on the one hand, can alleviate the phenomenon of poor sealing effectiveness of the opening by the shielding member due to a too-small overlap dimension, thereby reducing the risk of refrigerant leakage; on the other hand, it can reduce the redundancy of the shielding member due to a too-large overlap dimension, thereby contributing to the saving of the material of the shielding member so as to reduce the manufacturing cost of the hot management component.

In some embodiments, along a thickness direction of the connecting region, a size of a portion of the medium channel located within the connecting region is denoted as $D_2$. Along a thickness direction of the corner region, a portion of the medium channel located within the corner region is provided with a first inner sidewall and a second inner sidewall facing each other. The opening passes through the first inner sidewall, and a distance between the shielding member and the second inner sidewall is denoted as $D_3$, satisfying $D_3 \geq D_2$.

In the above technical solution, by setting the size of the medium channel in the corner region to be greater than the size of the medium channel in the connecting region, the hot management component using this structure ensures the permeability of the refrigerant in the medium channel located within the corner region. This helps to reduce the risk of blockage when the refrigerant flows through the medium channel located within the corner region, thus ensuring the normal operation of the hot management component. It, in turn, enables a balanced heat exchange capacity among multiple connecting regions.

In some embodiments, $2mm \leq D_2 \leq 3mm$.

In the above technical solution, by setting the size of the medium channel in the connecting region to be within the range of 2mm to 3mm, it alleviates the problem of poor permeability of the refrigerant in the medium channel due to a too-small size. On the other hand, it reduces the phenomenon of the main body part of the hot management component occupying too much space due to a too-large size, thus ensuring the energy density of the battery provided with the hot management component.

In some embodiments, $2mm \leq D_3 \leq 4mm$.

In the above technical solution, by setting the size of the medium channel in the corner region to be within the range of 2mm to 4mm, it alleviates the problem of poor permeability of the refrigerant in the medium channel due to a too-small size. On the other hand, it helps to reduce the difficulty of manufacturing the main body part of the hot management component at the location of the corner region due to a too-large size.

In the second aspect, the embodiments of the present disclosure further provide a battery, comprising a box, a battery cell, and the aforementioned hot management component. The battery cell is housed in the box. The hot management component is arranged in the box, the battery cell is arranged in the accommodating space, and the hot management component is configured to manage the temperature of the battery cells.

In the third aspect, the embodiments of the present disclosure further provide an electric device comprising the battery as described above, wherein the battery is configured to provide electrical energy.

In the fourth aspect, the embodiments of the present disclosure provide a manufacturing method of the hot management component, comprising providing a main body part, wherein the main body part is bent to form multiple connecting regions, and the multiple connecting regions are connected sequentially to form an accommodating space for accommodating battery cells; the connection position of two adjacent connecting regions form a corner region, and an interior of the main body part is provided with a medium channel passing through the corner region; an opening is provided at a position corresponding to the medium channel on a side of the corner region away from the accommodating space, and the opening is in communication with the medium channel; and providing a shielding member, wherein the shielding member is connected to the main body part so as to seal the openings.

In the above technical solution, the main body part with multiple connecting regions is first processed by bending, and on one side of the corner region formed at the connection position of adjacent two connecting regions, an opening in communication with the medium channel is formed. Subsequently, the opening is sealed by the shielding member to form a hot management component for regulating the temperature of battery cells. The hot management component manufactured using the manufacturing method ensures the height of the medium channel passing through the corner region. This is advantageous in enhancing the permeability of the refrigerant in the medium channel and ensuring the heat exchange capacity of the hot management component.

In some embodiments, providing the main body part comprises providing a composite sheet, where the interior of the composite sheet forms a medium channel; arranging an opening on one side of the composite sheet in communication with the medium channel; and bending the composite sheet to form the main body part.

In the above technical solution, the opening is first provided on one side of the composite sheet at a position where the medium channel is arranged. Subsequently, the composite sheet is bent towards the side away from the opening to form the structure so as to bend the composite sheet to form multiple connecting regions and corner regions and enable the opening to be arranged on the side of the corner region away from the accommodating space. Therefore, the main body part of the hot management component is formed. The main body part manufactured using the manufacturing method, through the opening, can effectively alleviate the significant tension generated on the side of the corner region away from the accommodating space during the bending process, thus reducing the risk of breakage or collapse in the corner region. On one hand, it ensures the permeability of the medium channel located within the corner region. On the other hand, it ensures the production quality and yield of the hot management component.

In some embodiments, providing a composite sheet comprises providing two sheets; stacking the two sheets and arranging a rolling inhibitor between the two sheets; hot rolling the two sheets to form a hot-rolled sheet; and expanding (blowing up) the hot-rolled sheet, so as to enable the hot-rolled sheet to form a medium channel at the position where the rolling inhibitor is arranged, to form a composite sheet.

In the above technical solution, the composite sheet is formed by hot rolling two sheets and then expanding, thus forming a medium channel inside the composite sheet for the flow of refrigerant. The composite sheet using the manufacturing method is less difficult to manufacture and has higher production efficiency, thus facilitating the mass production of hot management components.

**Brief Description of Drawings**

To more clearly illustrate the technical solutions of the embodiments of the present disclosure, the following will briefly introduce the drawings used in the embodiments. It should be understood that the following drawings only show some embodiments of the present disclosure, and therefore they should not be regarded as a limitation on the scope. Those ordinary skilled in the art can also obtain other related drawings based on these drawings without inventive effort.

FIG. 1 is a schematic diagram of a structure of a vehicle provided in some embodiments of the present disclosure;

FIG. 2 is an exploded view of the structure of a battery provided in some embodiments of the present disclosure;

FIG. 3 is a schematic diagram of a structure of a hot management component provided in some embodiments of the present disclosure;

FIG. 4 is a partially enlarged view at A of the hot management component shown in FIG. 3;

FIG. 5 is an exploded diagram of a structure of a hot management component provided in some embodiments of the present disclosure;

FIG. 6 is a partial sectional view of the hot management component provided in some embodiments of the present disclosure;

FIG. 7 is a partial sectional view at a corner region of the hot management component provided in some embodiments of the present disclosure;

FIG. 8 is a flowchart of a manufacturing method of the hot management component provided by the embodiment of the present disclosure;

FIG. 9 is a schematic diagram of a structure of a main body part of the hot management component provided in some embodiments of the present disclosure;

FIG. 10 is a flowchart of step S100 of the manufacturing method of the hot management component provided by the embodiment of the present disclosure;

FIG. 11 is a structural schematic diagram of a composite sheet provided in some embodiments of the present disclosure;

FIG. 12 is a structural schematic diagram of the composite sheet provided in some embodiments of the present disclosure after step S120;

FIG. 13 is a top view of the composite sheet provided in some embodiments of the present disclosure after step S120;

FIG. 14 is a flowchart of step S110 of the manufacturing method of the hot management component provided by the embodiment of the present disclosure; and

FIG. 15 is a structural schematic diagram of a hot-rolled sheet provided in some embodiments of the present disclosure.

Reference numerals: 1000- vehicle; 100- battery; 10- box; 11- first box body; 12- second box body; 20- battery cell; 30- hot management component; 31- main body part; 311- connecting region; 312- accommodating space; 313-corner region; 314- medium channel; 315- opening; 316- projection; 317-outer surface; 318- composite sheet; 3181- region to be bent; 3182- hot-rolled sheet; 3182a- sheet; 32- shielding member; 200- controller; 300- motor; X-extension direction of the corner region; Y- thickness direction of the connecting region; Z- thickness direction of the corner region.

**Detailed Description of Embodiments**

In order to make the objective, technical solution, and advantages of the embodiments of the present disclosure clearer, the following will provide a clear and complete description of the technical solution in the embodiments of the present disclosure, in conjunction with the drawings in the embodiments of the present disclosure. Obviously, the described embodiments are only a part of the embodiments of the present disclosure, rather than all embodiments. Based on the embodiments in the present disclosure, all other embodiments obtained by those of ordinary skill in the art without making inventive efforts are within the scope of protection of the present disclosure.

Unless otherwise defined, all technical and scientific terms used herein have the same meaning as understood by those skilled in the art of the relevant technical field. The terms used in the summary of the present disclosure are used for the purpose of describing specific embodiments and are not intended to limit the present disclosure. The terms "comprise" and "provide" and their variations, as well as any other variations, are intended to cover non-exclusive inclusion in the summary and the claims of the present disclosure, as well as in the drawings. The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other.

In the description of the present disclosure, it should be noted that, unless otherwise clearly stipulated and limited, the terms "provide", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A alone, the presence of both A and B, or the presence of B alone. Additionally, the character "/" in the present disclosure generally represents an "or" relationship between the preceding and following associated objects.

In the embodiments of the present disclosure, identical reference numerals indicate the same components. For the sake of conciseness, detailed explanations of the same components are omitted in different embodiments. It should be understood that the dimensions such as thickness, length, and width of various components in the embodiments of the present disclosure as shown in the drawings, as well as the overall dimensions such as thickness, length, and width of the integrated device, are provided as illustrative examples and should not be construed to limit the scope of the present disclosure.

In the present disclosure, the term "multiple" refers to two or more (including two).

In the present disclosure, the battery cell can comprise various types of batteries such as lithium-ion secondary batteries, lithium-ion primary batteries, lithium-sulfur batteries, sodium-ion batteries, magnesium-ion batteries, etc. The embodiments of the present disclosure are not limited to any specific type of battery. The battery cell can have various shapes such as cylindrical, flat, rectangular, or other shapes. The embodiments of the embodiments of the present disclosure do not impose limitations on this aspect either. The battery cells are generally categorized into three packaging types: cylindrical battery cells, prismatic battery cells, and pouch battery cells. The embodiments of the embodiments of the present disclosure do not impose limitations in this regard either.

The batteries mentioned in the embodiments of the present disclosure refer to a single physical module that comprises one or multiple battery cells to provide higher voltage and capacity. For example, the batteries mentioned in the present disclosure can comprise battery modules or battery packs, and so on. A battery generally comprises a box for encapsulating one or multiple battery cells or multiple battery modules. The box helps to prevent liquids or other foreign substances from affecting the charging or discharging of the battery cells.

In recent years, new energy vehicles have experienced a leapfrog development. In the field of electric vehicles, power batteries serve as the energy source for electric vehicles and play an irreplaceable important role. The battery consists of a box and multiple battery cells accommodated within the box. The battery, as the core component of new energy vehicles, has high requirements in terms of both safety and cycle service life.

The inventors have found that, in conventional power batteries, to ensure that the battery obtains sufficient power, multiple battery cells within the box of the battery are typically arranged in a stacked configuration. However, during the continuous charging and discharging process, the battery cells inside the battery generate a large amount of heat, leading to a rapid increase in the internal temperature of the battery. The stacked arrangement of multiple battery cells exacerbates this phenomenon. This significantly affects the performance and lifespan of the battery, and may even pose significant safety hazards during use, which is not conducive to consumer safety. Therefore, in existing technologies, it is common to arrange a water-cooling plate inside the box of the battery. The water-cooling plate is arranged on one side of multiple battery cells, and a channel for the flow of a cooling medium is formed in the interior of the water-cooling plate. This allows the water-cooling plate to play a role in cooling and temperature reduction for the battery cells. However, the structure of the water-cooling plate has a relatively small heat exchange area with the battery cells inside the box of the battery, leading to lower heat exchange efficiency. This not only prevents effective heat dissipation from the battery cells, leading to potential safety issues such as thermal spread or thermal runaway but also results in temperature differences between multiple battery cells, thus adversely affecting the lifespan of the battery cells. Consequently, it hinders the improvement of both the safety and lifespan of the battery.

Based on the above considerations and to address the issues of lower safety and shorter lifespan in existing batteries, the inventors conducted in-depth research and designed a hot management component. The hot management component comprises a main body part and a shielding member. The main body part is bent to form multiple connecting regions, and the multiple connecting regions are connected sequentially to form an accommodating space for accommodating battery cells. The connection position of two adjacent connecting regions forms a corner region, and an interior of the main body part is provided with a medium channel passing through the corner region. An Opening is provided at a position corresponding to the medium channel on a side of the corner region away from the accommodating space, and the opening is in communication with the medium channel. The shielding member is connected to the main body part and seals the opening.

In the hot management component of the structure, by bending the main body part of the hot management component to form multiple connecting regions and forming the corner region at the connection positions of two adjacent connecting regions, the connecting regions and corner region together define the accommodating space for accommodating battery cells, which allows the main body part of the hot management component to have multiple connecting regions that can be in contact with the battery cells. This effectively increases the heat exchange area between the hot management component and the battery cells so as to improve the heat exchange efficiency of the hot management component. On one hand, it enables effective heat dissipation from the battery cells, reducing safety issues of the battery such as thermal spread or thermal runaway. On the other hand, when multiple battery cells are arranged in the accommodating space of the hot management component, it can reduce the temperature difference between the multiple battery cells, thereby reducing the impact on the lifespan of the battery cells. This, in turn, contributes to enhancing the safety and lifespan of the battery.

Additionally, on the side of the corner region away from the accommodating space and corresponding to the position where the medium channel is arranged, the opening is provided. The opening is sealed by a separate shielding member so as to allow the opening to relieve the significant tension generated by the corner region of the main body part, which occurs during the bending of the main body part to form the corner region in the production process of the hot management component. This helps to mitigate the risk of the corner region of the main body breaking or collapsing, thus ensuring the production quality and yield of the hot management component. The structure of sealing the opening with the shielding member also ensures the height of the medium channel passing through the corner region, thereby enhancing the permeability of the refrigerant in the medium channel to ensure the heat exchange capacity of the hot management component.

The hot management component disclosed in the embodiments of the present disclosure can be used in various electric devices, comprising but not limited to vehicles, ships, or aircraft. The power system of the electric device can be formed using the hot management component and battery disclosed in the present disclosure. This helps to enhance the heat exchange capacity of the hot management component, thus improving the safety and lifespan of the battery.

The embodiments of the present disclosure provide an electric device that uses batteries as a power source. The electric device can comprise but is not limited to, mobile phones, tablets, laptops, electric toys, power tools, electric bicycles, electric cars, boats, spacecraft, and more. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electric device is a vehicle as an example.

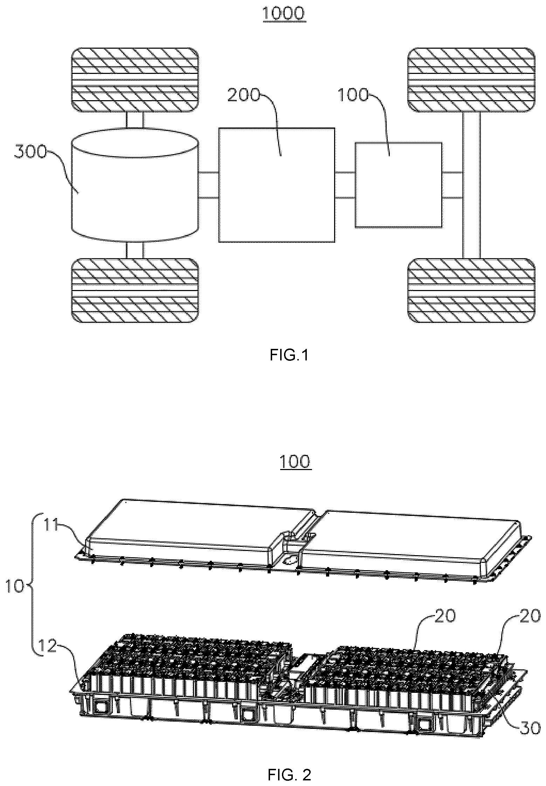

Referring to FIG. 1, FIG. 1 is a schematic diagram of a structure of a vehicle 1000 provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000. Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of the structure of a battery 100 provided in some embodiments of the present disclosure. The battery 100 comprises a box 10 and multiple battery cells 20, wherein the battery cells 20 are configured to be housed in the box 10. The box 10 is configured to provide an assembly space for the battery cell 20, and the box 10 can be of various structures. In some embodiments, the box 10 can comprise a first box body 11 and a second box body 12, wherein the first box body 11 and the second box body 12 are fitted together. The first box body 11 and the second box body 12 collectively define an assembly space for accommodating the battery cell 20. The second box body 12 can be a hollow structure open at one end, and the first box body 11 can be a plate-like structure. The first box body 11 is capped over an open side of the second box body 12 so that the first box body 11 and the second box body 12 together define an assembly space. Alternatively, both the first box body 11 and the second box body 12 can be hollow structures open at one end, and an open side of the first box body 11 is capped over an open side of the second box body 12. Of course, the box 10 formed by the first box body 11 and the second box body 12 can be of a variety of shapes, e.g., cylindrical, rectangular, etc.

In the battery module 100, the multiple battery cells 20 can be connected in series, parallel, or hybrid. A hybrid connection refers to having both series and parallel connections among multiple battery cells 20. The multiple battery cells 20 can be directly connected in series, parallel, or hybrid, and then the whole comprising the multiple battery cells 20 is housed in the box 10. Of course, the battery 100 can also be in the form that, the multiple battery cells 20 can be first connected in series, parallel, or hybrid to form battery modules, and then the multiple battery modules can be connected in series, parallel, or hybrid to be formed into a whole, which is accommodated within the box 10. The battery 100 can also comprise other structures. For example, the battery 100 can also comprise a busbar component, configured for achieving an electrical connection between the multiple battery cells 20.

In some embodiments of the present disclosure, with reference to FIG. 2, the battery 100 can also include a hot management component 30, wherein the hot management component 30 is arranged inside the box 10. The hot management component 30 is configured to manage the temperature of the battery cells 20, thus playing a role in cooling and temperature reduction for the battery 100.

Each battery cell 20 can be a secondary battery or a primary battery. It can also be a lithium-sulfur battery, sodium-ion battery, magnesium-ion battery, or other types, but is not limited to these. The battery cell 20 can have various shapes such as cylindrical, flat, rectangular, or other shapes. Exemplarily, in FIG. 2, the battery cell 20 has a rectangular shape.

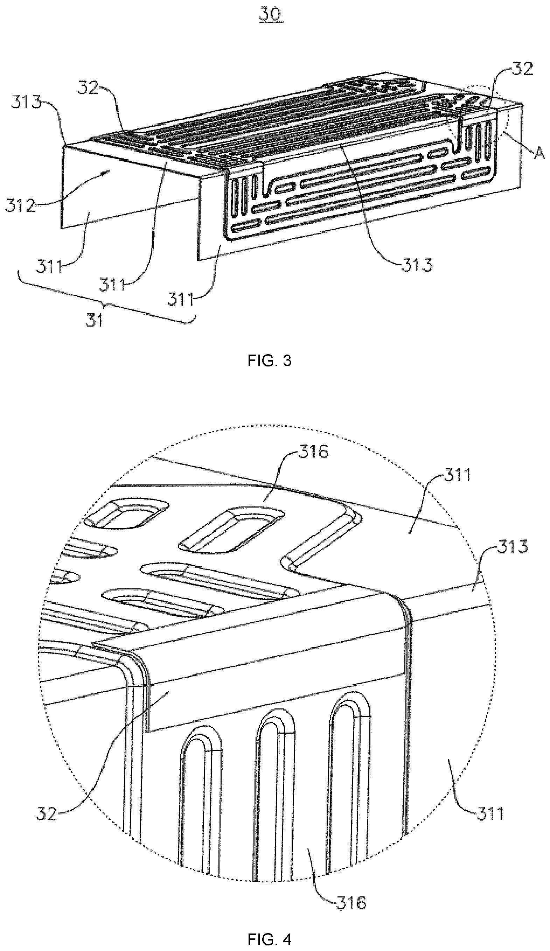

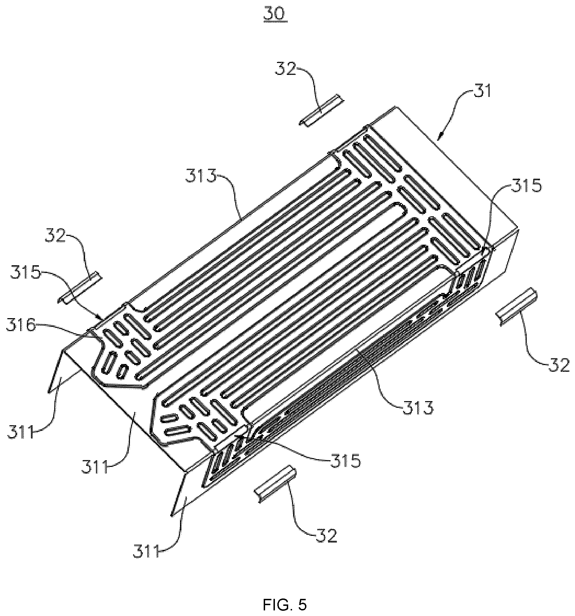

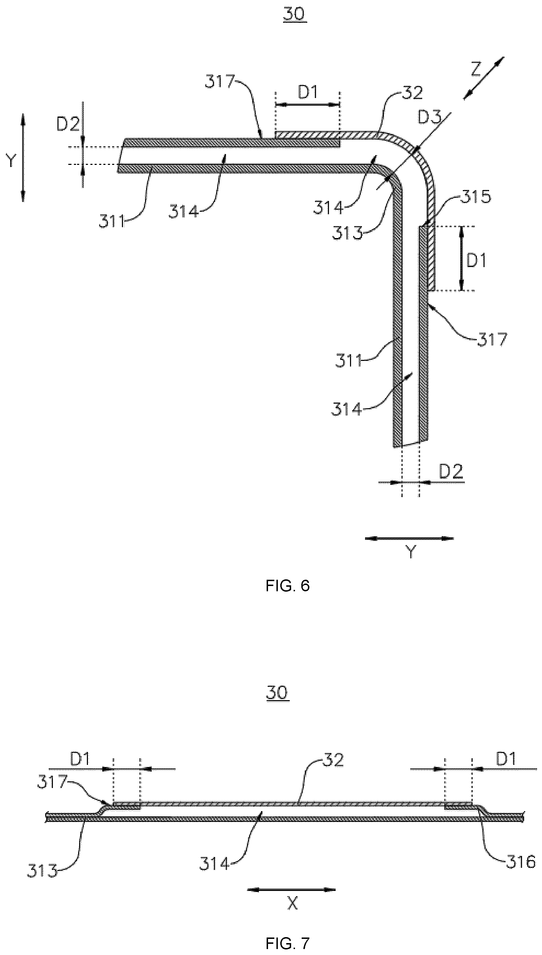

According to some embodiments of the present disclosure, with reference to FIG. 3 to FIG. 6, FIG. 3 is a schematic diagram of a structure of a hot management component 30 provided in some embodiments of the present disclosure; FIG. 4 is a partially enlarged view at A of the hot management component 30 shown in FIG. 3; FIG. 5 is a schematic diagram of a structure of a hot management component 30 provided in some embodiments of the present disclosure; and FIG. 6 is a partial sectional view of the hot management component 30 provided in some embodiments of the present disclosure. The present disclosure provides a hot management component 30, wherein the hot management component 30 comprises a main body part 31 and a shielding member 32. The main body part 31 is bent to form multiple connecting regions 311, and the multiple connecting regions 311 are connected sequentially to form an accommodating space 312 for accommodating battery cells 20. The connection position of two adjacent connecting regions 311 form a corner region 313, and an interior of the main body part 31 is provided with a medium channel 314 passing through the corner region 313. An opening 315 is provided at a position corresponding to the medium channel 314 on a side of the corner region 313 away from the accommodating space 312, and the opening 315 is in communication with the medium channel 314. The shielding member 32 is connected to the main body part 31 and seals the opening 315.

The main body part 31 is a component of the hot management component 30 configured to make contact with the battery cell 20. This enables heat exchange between the main body part 31 and the battery cell 20, thereby achieving the function of the hot management component 30 to manage the temperature of the battery cell 20.

The main body part 31 is bent to form multiple connecting regions 311, and the multiple connecting regions 311 are connected sequentially to form an accommodating space 312 for accommodating battery cells 20. In other words, the main body part 31 of the hot management component 30 is a bent structure formed by a bending process of a plate-like structure. Each region after bending is a connecting region 311. The connecting region 311 is a region configured for heat exchange with the battery cells 20 after making contact. The space enclosed by multiple connecting regions 311 is the accommodating space 312 configured for accommodating or arranging the battery cells 20.

The material and structure of the main body part 31 can be varied. For example, the material of the main body part 31 can be aluminum or aluminum alloy, which is pliable and facilitates bending.

Exemplarily, in FIG. 3, the main body part 31 is bent to form a structure resembling a "U", that is, the main body part 31 is bent twice to form three connecting regions 311. The space formed by the three connecting regions 311 of the main body part 31 is the accommodating space 312 configured for accommodating the battery cells 20. Of course, in other embodiments, the main body part 31 can also be bent only once to form two connecting regions 311, such as a structure resembling an "L" or "V". Alternatively, it can be bent three times, four times, or five times to form multiple connecting regions 311. It should be noted that the bending angle of the main body part 31 can be diverse. In FIG. 3, the bending angle of the main body part 31 is 90 degrees, meaning that adjacent two connecting regions 311 are perpendicular to each other. Of course, in some embodiments, the bending angle of the main body part 31 can be 30 degrees, 40 degrees, 45 degrees, 60 degrees, or 120 degrees, where adjacent two connecting regions 311 form acute or obtuse angles.

The connection position of adjacent two connecting regions 311 forms a corner region 313, which means that the corner region 313 is the region where the main body part 31 is bent, and the region not bent is the connecting region 311. This ensures that adjacent two connecting regions 311 are connected through a bent region.

The interior of the main body part 31 is provided with a medium channel 314 passing through the corner region 313. In other words, the main body part 31 is provided therein with a medium channel 314, and the medium channel 314 passes from one connecting region 311 through a corner region 313 and into another adjacent connecting region 311. In FIGS. 3 and 4, due to the medium channel 314 formed by the expansion process of the main body part 31, the location where a projection 316 is formed on the main body part 31 is the location where a medium channel 314 is formed in the interior of the main body part 31. Exemplarily, at the corner region 313 of the main body part 31, two medium channels 314 pass through, thus enabling a loop for the medium channels 314 inside the whole main body part 31.

The medium channel is configured to accommodate the refrigerant, which means that the refrigerant, when flowing through the medium channel, can undergo heat exchange with the battery cells 20 through the hot management component 30, thereby achieving the function of managing the temperature of the battery cells 20 by the hot management component 30. Exemplarily, the refrigerant can be a gas, such as air or hydrogen, or it can be a liquid, such as water, saline solution, or liquid nitrogen, and so on.

On the side of the corner region 313 away from the accommodating space 312, an opening 315 corresponding to the position of the medium channel 314 is provided, and the opening 315 is in communication with the medium channel 314. In other words, the opening 315 is provided on one side of the corner region 313; and the opening 315 is located on the side of the corner region 313 away from the accommodating space 312 and is arranged in the interior of the corner region 313 having the media channel 314. This allows the opening 315 to communicate with the medium channel 314 located in the corner region 313. Exemplarily, as shown in FIG. 5, openings 315 are provided at the positions of the two medium channels 314 passing through the corner region 313 so as to facilitate the bending of the main body part 31 to form a bent structure.

The shielding member 32 is connected to the main body part 31, serving to seal the opening 315. Optionally, the connection position and the connection method between the shielding member 32 and the main body part 31 can be diverse. Exemplarily, as shown in FIGS. 4 and 6, the shielding member 32 can be connected to the side of the main body part 31 away from the accommodating space 312. Of course, in other embodiments, the shielding member 32 can also be arranged inside the opening 315 and connected to the inner sidewall of the opening 315 to seal the opening 315. Correspondingly, the shielding member 32 can be connected to the main body part 31 using methods such as welding or bonding.

Because the opening 315 is arranged in the corner region 313 of the main body part 31, to enhance the sealing effect of the shielding member 32 on the opening 315, the shielding member 32 is a structure that extends along the bending direction of the corner region 313. Exemplarily, in FIG. 6, the shielding member 32 is an L-shaped structure.

By bending the main body part 31 of the hot management component 30 to form multiple connecting regions 311 and forming the corner region 313 at the connection positions of two adjacent connecting regions 311, the connecting regions 311 and corner region 313 together define the accommodating space 312 for accommodating battery cells 20, which allows the main body part 31 of the hot management component 30 to have multiple connecting regions 311 that can be in contact with the battery cells 20. This effectively increases the heat exchange area between the hot management component 30 and the battery cells 20 so as to improve the heat exchange efficiency of the hot management component 30. On one hand, it enables effective heat dissipation from the battery cells 20, reducing safety issues of the battery 100 such as thermal spread or thermal runaway. On the other hand, when multiple battery cells 20 are arranged in the accommodating space 312 of the hot management component 30, it can reduce the temperature difference between the multiple battery cells 20, thereby reducing the impact on the lifespan of the battery cells 20. This, in turn, contributes to enhancing the safety and lifespan of the battery 100. Additionally, on the side of the corner region 313 away from the accommodating space 312 and corresponding to the position where the medium channel 314 is arranged, the opening 315 is provided. The opening 315 is sealed by a separate shielding member 32 so as to allow the opening 315 to relieve the significant tension generated by the corner region 313 of the main body part 31, which occurs during the bending of the main body part 31 to form the corner region 313 in the production process of the hot management component 30. This helps to mitigate the risk of the corner region 313 of the main body 31 breaking or collapsing, thus ensuring the production quality and yield of the hot management component 30. The structure of sealing the opening 315 with the shielding member 32 also ensures the height of the medium channel 314 passing through the corner region 313, thereby enhancing the permeability of the refrigerant in the medium channel 314 to ensure the heat exchange capacity of the hot management component 30.

According to some embodiments of the present disclosure, with reference to FIG. 6, multiple connecting regions 311 include a first connecting region 311, a second connecting region 311, and a third connecting region 311, wherein the first connecting region 311 and the third connecting region 311 are arranged opposite to each other, and the second connecting region 311 connects the first connecting region 311 and the third connecting region 311.

In the above description, the main body part 31 of the hot management component 30 forms three connecting regions 311, namely the sequentially connected first connecting region, the second connecting region, and the third connecting region. The three connecting regions 311 are sequentially connected to form a structure resembling a "U" shape. Two of the three connecting regions 311 arranged opposite each other are the first connecting region 311 and the third connecting region 311, i.e., the sequentially connected first connecting region 311, the second connecting region 311, and the third connecting region 311. The first connecting region 311 and the third connecting area 311 are arranged opposite to each other so that the main body part 31 of the hot management component 30 is formed into a structure resembling a "U" shape. In other words, the main body part 31 of the hot management component 30 is bent twice to form a structure resembling a "U", thus providing three connecting regions 311 and two corner regions 313.

The hot management component 30, using the structure, can be in contact with three different surfaces of the battery cell 20 housed in the accommodating space 312, which increases the heat exchange area between the hot management component 30 and the battery cell 20 and effectively enhances the heat management capability for the battery cells 20.

According to some embodiments of the present disclosure, with reference to FIG. 5 and FIG. 6, the adjacent two connecting regions 311 are mutually perpendicular.

The adjacent two connecting regions 311 are perpendicular to each other, meaning that the bending angle of the main body part 31 is 90 degrees so as to form a 90-degree angle between the adjacent two connecting regions 311. Of course, in some embodiments, the bending angle of the main body part 31 can be 30 degrees, 40 degrees, 45 degrees, 60 degrees, or 120 degrees, where adjacent two connecting regions 311 form acute or obtuse angles.

By arranging the adjacent two connecting regions 311 in a mutually perpendicular structure, it facilitates the mutual fitting of the main body part 31 with different surfaces of the battery cell 20. On one hand, it is convenient to assemble the battery cell 20 into the accommodating space 312 of the main body part 31. On the other hand, it effectively increases the contact area between the hot management component 30 and the battery cell 20.

According to some embodiments of the present disclosure, with reference to FIG. 4 and FIG. 6, the main body part 31 is provided with an outer surface 317, and the opening 315 is provided on the outer surface 317. The shielding member 32 fits onto the outer surface 317.

The main body part 31 is provided with an outer surface 317, and the opening 315 is arranged on the outer surface 317. In other words, a surface of the side of the main body part 31 provided with the opening 315 is the outer surface 317, which means that a surface of the side of the main body part 31 away from the accommodating space 312 is the outer surface 317.

The shielding member 32 adheres to the outer surface 317, which means that the shielding member 32 is covered over and connected to a portion of the outer surface 317 of the main body part 31 to seal the opening 315.

The opening 315 is provided on the outer surface 317 of the main body part 31, meaning that the side of the main body part 31 away from the accommodating space 312 is the outer surface 317 of the main body part 31. This allows the opening 315 to be provided on the outer surface 317 of the main body part 31. By fitting the shielding member 32 onto the outer surface 317 of the main body part 31, the hot management component 30 with the structure is conducive to enhancing the sealing effect of the shielding member 32 on the opening 315. Additionally, it facilitates the connection of the shielding member 32 to the main body part 31, thus reducing processing difficulty. Moreover, it effectively increases the connecting area between the shielding member 32 and the main body part 31, thereby promoting the stability and reliability of the connection between the shielding member 32 and the main body part 31.

According to some embodiments of the present disclosure, with reference to FIG. 6, and with further reference to FIG. 7, FIG. 7 is a partial sectional view at a corner region 313 of the hot management component 30 provided in some embodiments of the present disclosure. A width of a portion of the shielding member 32 that extends beyond the edge of the opening 315 is denoted as $D_1$, which satisfies $6mm \leq D_1 \leq 15mm$.

A width of a portion of the shielding member 32 that extends beyond the edge of the opening 315 is denoted as $D_1$. That is to say, after the shielding member 32 adheres to the outer surface 317 of the main body part 31 and covers the entire opening 315, the overlap size between the shielding member 32 and the outer surface 317 of the main body part 31 is denoted as $D_1$. The range of $D_1$ is between 6mm and 15mm. In other words, the overlap dimensions of the edges of the periphery of the shielding member 32 and the outer surface 317 of the main body part 31 are all in the range of 6 mm to 15 mm. Exemplarily, the width $D_1$ of a portion of the shielding member 32 that extends beyond the edge of the opening 315 can be 6mm, 6.5mm, 7mm, 8mm, 10mm, 12mm or 15mm, etc. For example, in FIG. 6, along the bending direction of the corner region 313, the width of the portion of the shielding member 32 that extends beyond the edge of the opening 315 is between 6mm and 15mm. In other words, on the bending direction of the corner region 313, the overlap dimension between both ends of the shielding member 32 and the outer surface 317 of the main body part 31 is between 6mm and 15mm. Similarly, as shown in FIG. 7, along the extension direction X of the corner region, the width of the portion of the shielding member 32 that extends beyond the edge of the opening 315 is between 6mm and 15mm. In other words, on the extension direction X of the corner region, the overlap dimension between both ends of the shielding member 32 and the outer surface 317 of the main body part 31 is between 6mm and 15mm.

By setting the width of the portion of the shielding member 32 that extends beyond the edge of the opening 315 at 6 mm to 15 mm, this structure, on the one hand, can alleviate the phenomenon of poor sealing effectiveness of the opening 315 by the shielding member 32 due to a too-small overlap dimension, thereby reducing the risk of refrigerant leakage; on the other hand, it can reduce the redundancy of the shielding member 32 due to a too-large overlap dimension, thereby contributing to the saving of the material of the shielding member 32 so as to reduce the manufacturing cost of the hot management component 30.

According to some embodiments of the present disclosure, with reference to FIG. 6, along a thickness direction Y of the connecting region, a size of a portion of the medium channel 314 located within the connecting region 311 is denoted as $D_2$. Along a thickness direction Z of the corner region, a portion of the medium channel 314 located within the corner region 313 is provided with a first inner sidewall and a second inner sidewall facing each other. The opening 315 passes through the first inner sidewall, and a distance between the shielding member 32 and the second inner sidewall is denoted as $D_3$, satisfying $D_3 \geq D_2$.

Along the thickness direction Y of the connecting region, the size of a portion of the medium channel 314 located within the connecting region 311 is denoted as $D_2$, which means that in the thickness direction Y of the connecting region, the height dimension of the medium channel 314 located within the connecting region 311 is $D_2$.

Along a thickness direction Z of the corner region, a portion of the medium channel 314 located within the corner region 313 is provided with a first inner sidewall and a second inner sidewall facing each other. The opening 315 passes through the first inner sidewall, and a distance between the shielding member 32 and the second inner sidewall is denoted as $D_3$. That is, in the thickness direction Z of the corner region, the medium channel 314 located within the corner region 313 is provided with two inner sidewalls arranged opposite to each other, and the distance between one of the inner sidewalls away from the shielding member 32 and the shielding member 32 is $D_3$. In other words, in the bending radius direction of the corner region 313, the height of the cavity is jointly defined by the shielding member 32 and the medium channel 314 inside the corner region 313 is $D_3$.

By setting the size of the medium channel 314 in the corner region 313 to be greater than the size of the medium channel 314 in the connecting region 311, the hot management component 30 using this structure ensures the permeability of the refrigerant in the medium channel 314 located within the corner region 313. This helps to reduce the risk of blockage when the refrigerant flows through the medium channel 314 located within the corner region 313, thus ensuring the normal operation of the hot management component 30. It, in turn, enables a balanced heat exchange capacity among multiple connecting regions 311.

In some embodiments of the present disclosure, with reference to FIG. 6, $2mm \leq D_2 \leq 3mm$. Exemplarily, $D_2$ can be 2mm, 2.1mm, 2.2mm, 2.5mm, 2.8mm, or 3mm, and the like. By setting the size of the medium channel 314 in the connecting region 311 to be within the range of 2mm to 3mm, it alleviates the problem of poor permeability of the refrigerant in the medium channel 314 due to a too-small size. On the other hand, it reduces the phenomenon of the main body part 31 of the hot management component 30 occupying too much space due to a too-large size, thus ensuring the energy density of the battery 100 provided with the hot management component 30.

In some embodiments of the present disclosure, with reference to FIG. 6, $2mm \leq D_3 \leq 4mm$. Exemplarily, $D_3$ can be 2mm, 2.1mm, 2.2mm, 2.5mm, 2.8mm, 3mm, or 4mm, and the like. By setting the size of the medium channel 314 in the corner region 313 to be within the range of 2mm to 4mm, it alleviates the problem of poor permeability of the refrigerant in the medium channel 314 due to a too-small size. On the other hand, it helps to reduce the difficulty of manufacturing the main body part 31 of the hot management component 30 at the location of the corner region 313 due to a too-large size.

According to some embodiments of the present disclosure, with reference to FIG. 2 and FIG. 3, the embodiments of the present disclosure further provide a battery 100, wherein the battery 100 comprises a box 10, a battery cell 20, and the hot management component 30 according to any one of the solutions above. The battery cell 20 is housed in the box 10. The hot management component 30 is arranged in the box 10, the battery cell 20 is arranged in the main body part 31 of the accommodating space 312, and the hot management component 30 is configured to manage the temperature of the battery cell 20.

According to some embodiments of the present disclosure, the embodiments of the present disclosure provide an electric device, wherein the electric device comprises a battery 100 of any of the above solutions, and the battery 100 is configured to provide electrical energy to the electric device.

The electric device can be any of the above-mentioned devices or systems that apply the battery 100.

According to some embodiments of the present disclosure, with reference to FIGS. 3 to 7, the present disclosure provides a hot management component 30, wherein the hot management component 30 comprises a main body part 31 and a shielding member 32. The main body part 31 is bent to form three connecting regions 311, and the three connecting regions 311 are connected sequentially to form an accommodating space 312 for accommodating battery cells 20. The connecting position of adjacent two connecting regions 311 forms a corner region 313, and the adjacent two connecting regions 311 are mutually perpendicular. An interior of the main body part 31 is provided with a medium channel 314 passing through the corner region 313. An opening 315 is provided at a position corresponding to the medium channel 314 on a side of the corner region 313 away from the accommodating space 312, and the opening 315 is in communication with the medium channel 314. The shielding member 32 is connected to the main body part 31, the main body part 31 is provided with an outer surface 317, and the opening 315 is provided on the outer surface 317. The shielding member 32 fits onto the outer surface 317 and seals the opening 315. A width of a portion of the shielding member 32 that extends beyond the edge of the opening 315 is denoted as $D_1$, which satisfies $6mm \leq D_1 \leq 15mm$.

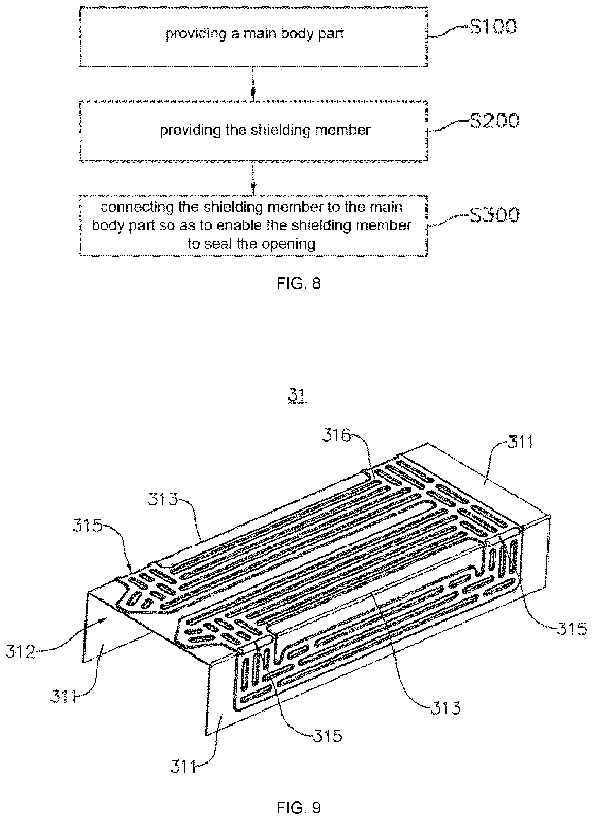

According to some embodiments of the present disclosure, the embodiments of the present disclosure provide a manufacturing method of the hot management component 30, with reference to FIG. 5, and with further reference to FIG. 8, FIG. 8 is a flowchart of a manufacturing method of the hot management component 30 provided by the embodiment of the present disclosure, wherein the manufacturing method comprises

S100: providing a main body part 31, wherein the main body part 31 is bent to form multiple connecting regions 311, and the multiple connecting regions 311 are connected sequentially to form an accommodating space 312 for accommodating battery cells 20; the connection position of two adjacent connecting regions 311 form a corner region 313, and an interior of the main body part 31 is provided with a medium channel 314 passing through the corner region 313; and an opening 315 is provided at a position corresponding to the medium channel 314 on a side of the corner region 313 away from the accommodating space 312, and the opening 315 is in communication with the medium channel 314 (referring to FIG. 9, FIG. 9 is a schematic diagram of a structure of the main body part 31 of the hot management component 30 provided in some embodiments of the present disclosure);

S200: providing the shielding member 32; and

S300: connecting the shielding member 32 to the main body part 31 so as to enable the shielding member 32 to seal the opening 315.

The shielding member 32 blocks the opening 315, thus reducing the risk of refrigerant leakage in the medium channel 314. The connection between the shielding member 32 and the main body part 31 can be various, such as welding or bonding.

In the above manufacturing method, the main body part 31 with multiple connecting regions 311 is first processed by bending, and on one side of the corner region 313 formed at the connection position of adjacent two connecting regions 311, an opening 315 in communication with the medium channel 314 is formed. Subsequently, the opening 315 is sealed by the shielding member 32 to form a hot management component 30 for regulating the temperature of battery cells 20. The hot management component 30 manufactured using the manufacturing method ensures the height of the medium channel 314 passing through the corner region 313. This is advantageous in enhancing the permeability of the refrigerant in the medium channel 314 and ensuring the heat exchange capacity of the hot management component 30.

It should be noted that the relevant structures of the hot management component 30 manufactured by the manufacturing method provided in the above embodiments can be referred to in the hot management component 30 provided in the previous embodiments, and will not be repeated here.

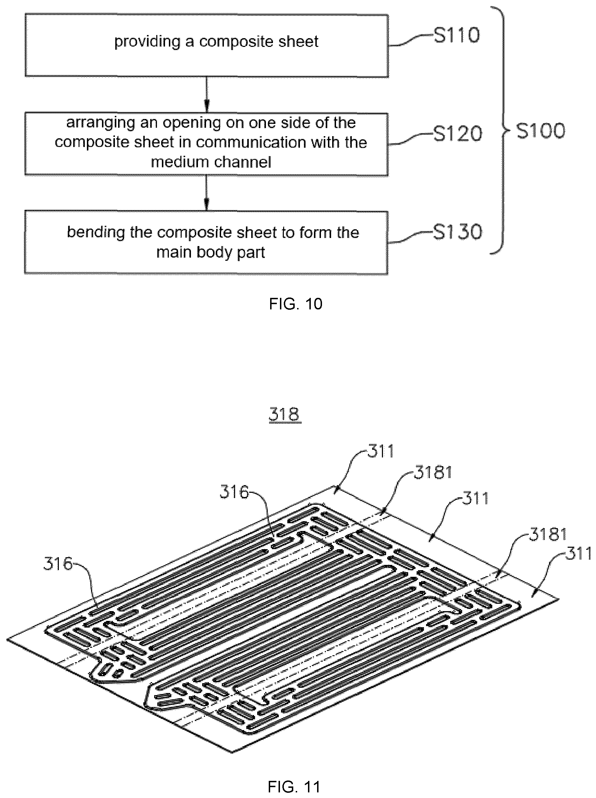

According to some embodiments of the present disclosure, with reference to FIGS. 8 and 9, and with further reference to FIG. 10, FIG. 10 is a flowchart of step S100 of the manufacturing method of the hot management component 30 provided by the embodiment of the present disclosure. The step of "S100: providing the main body part 31" comprises the following steps.

S110: providing a composite sheet 318, wherein the interior of the composite sheet 318 forms a medium channel 314. Referring to FIG. 11, FIG. 11 is a structural schematic diagram of a composite sheet 318 provided in some embodiments of the present disclosure.

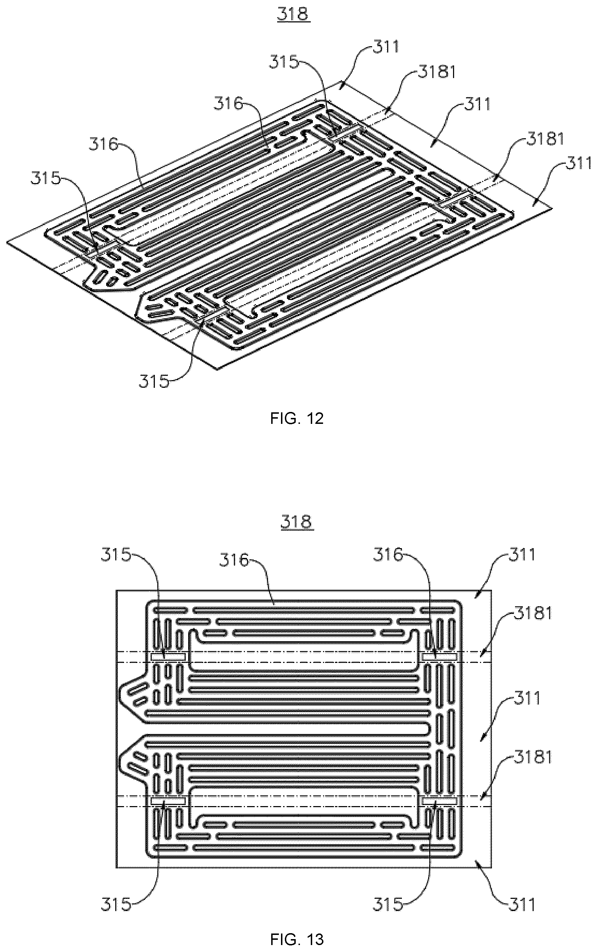

S120: arranging an opening 315 on one side of the composite sheet 318 in communication with the medium channel 314. Referring to FIG. 12 and FIG. 13, FIG. 12 is a structural schematic diagram of the composite sheet 318 provided in some embodiments of the present disclosure after step S120; and FIG. 13 is a top view of the composite sheet 318 provided in some embodiments of the present disclosure after step S120.

S130: bending the composite sheet 318 to form the main body part 31 (referring to FIG. 9).

In FIG. 11, a medium channel 314 for the flow of the refrigerant is formed inside the composite sheet 318, wherein the position of the projection 316 on the composite sheet 318 is the location of the medium channel 314. For ease of illustration, the composite sheet 318 is divided into multiple regions, the composite sheet 318 is provided with the region to be bent 3181 for bending, and the region of the composite sheet 318 that does not need to be bent is the connecting region 311 of the main body part 31. Each of the two adjacent connecting regions 311 is connected by one region to be bent 3181. Additionally, the medium channel 314 formed inside the composite sheet 318 passes from one connecting region 311 through the region to be bent 3181 and into another adjacent connecting region 311. When the composite sheet 318 passes through step S130, the corner region 313 of the main body part 31 is formed when the region to be bent 3181 is bent.

The composite sheet 318 is provided therein with a medium channel 314, and the manufacturing method of the composite sheet 318 can be various, such as forming the composite sheet 318 provided therein with the medium channel 314 through processes like stamping or casting. It can also be formed by the expansion process to form the medium channel 314 inside the composite sheet 318.

In FIGS. 12 and 13, after the composite sheet 318 undergoes step S120, one side of the region to be bent 3181 of the composite sheet 318 is provided with an opening 315. The opening 315 is in communication with a portion of the medium channel 314 located inside the region to be bent 3181, thus facilitating subsequent processing to bend the composite sheet 318 and form the main body part 31. The method of providing the opening 315 on the composite sheet 318 can be various. Exemplarily, the opening 315 can be formed in the region to be bent 3181 of the composite sheet 318 by laser cutting or mechanical tool cutting.

In the above manufacturing method, the opening 315 is first provided on one side of the composite sheet 318 at a position where the medium channel 314 is arranged. Subsequently, the composite sheet 318 is bent towards the side away from the opening 315 to form the structure so as to bend the composite sheet 318 to form multiple connecting regions 311 and corner regions 313 and enable the opening 315 to be arranged on the side of the corner region 313 away from the accommodating space 312. Therefore, the main body part 31 of the hot management component 30 is formed. The main body part 31 manufactured using the manufacturing method, through the opening 315, can effectively alleviate the significant tension generated on the side of the corner region 313 away from the accommodating space 312 during the bending process, thus reducing the risk of breakage or collapse in the corner region 313. On one hand, it ensures the permeability of the medium channel 314 located within the corner region 313. On the other hand, it ensures the production quality and yield of the hot management component 30.

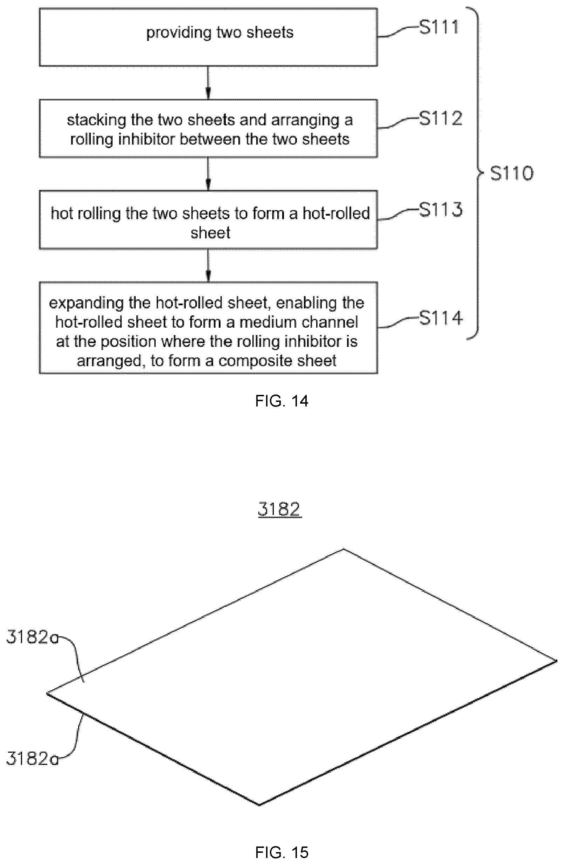

According to some embodiments of the present disclosure, with reference to FIG. 10, and with further reference to FIG. 14, FIG. 14 is a flowchart of step S110 of the manufacturing method of the hot management component 30 provided by the embodiment of the present disclosure. The step of S110: providing a composite sheet 318 includes

S111: providing two sheets 3182a;

S112: stacking the two sheets 3182a and arranging a rolling inhibitor between the two sheets 3182a;

S113: hot rolling the two sheets 3182a to form a hot-rolled sheet 3182 (referring to FIG. 15, FIG. 15 is a structural schematic diagram of a composite sheet 3182 provided in some embodiments of the present disclosure); and

S114: expanding the hot-rolled sheet 3182, so as to enable the hot-rolled sheet 3182 to form a medium channel 314 at the position where the rolling inhibitor is arranged, to form a composite sheet 318.

Exemplarily, the material of the two sheets 3182a provided in step S111 can be a material that is easily bendable, such as aluminum or aluminum alloy.

In step S112, before hot-rolling the two sheets 3182a, it is necessary to coat a rolling inhibitor between the two sheets 3182a. This is to facilitate subsequent expansion after hot-rolling of the two sheets 3182a, thereby forming the medium channel 314. Exemplarily, the material of the rolling inhibitor can be various, such as graphite or boron nitride emulsion. Similarly, the shape of the coated area of the rolling inhibitor can also be various. In the actual manufacturing process, the rolling inhibitor can be coated between the two sheets 3182a with different shapes according to the actual requirements of the medium channel 314. The embodiments of the present disclosure do not limit the specific shape.

In step S113, the two sheets 3182a are hot-rolled to form a hot-rolled sheet 3182. Since a portion of the region between the two sheets 3182a is coated with a rolling inhibitor, the region between the two sheets 3182a coated with the rolling inhibitor will not be hot rolled into one piece during the hot rolling of the two sheets 3182a. Instead, the region between the two sheets 3182a that is not coated with the rolling inhibitor will be hot-rolled into one piece, thereby facilitating the subsequent formation of the medium channel 314 after blowing the hot-rolled sheet 3182.

In step S114, during the expansion process of the hot-rolled plate 3182, the region where the two sheets 3182a are coated with the rolling inhibitor deforms and arches, forming the projection 316 on the composite sheet 318. This enables the formation of the medium channels 314 inside the hot-rolled sheet 3182 at a location corresponding to the projection 316, thus forming the composite sheet 318 (as shown in FIG. 11). Specific embodiments of the expansion process can be found in the related art and will not be repeated here.

In the above manufacturing method, the composite sheet 318 is formed by hot rolling two sheets 3182a and then expanding, thus forming a medium channel 314 inside the composite sheet 318 for the flow of refrigerant. The composite sheet 318 using the manufacturing method is less difficult to manufacture and has higher production efficiency, thus facilitating the mass production of hot management components 30.

It should be noted that, without conflict, the embodiments and features described in the embodiments of the present disclosure can be combined with each other.

The above are only preferred embodiments of the present disclosure, which is not intended to limit, and the present disclosure can have various changes and variations for those skilled in the art. Any modification, equivalent substitution, improvement, etc. made within the spirit and principles of the present disclosure shall be included in the scope of protection of the present disclosure.

**Claims**

1. A hot management component, comprising

   a main body part, bent to form multiple connecting regions, wherein the multiple connecting regions are connected sequentially to form an accommodating space for accommodating battery cells; a connection position of two adjacent connecting regions forms a corner region, and an interior of the main body part is provided with a medium channel passing through the corner region; an opening is provided at a position corresponding to the medium channel on a side of the corner region away from the accommodating space; and the opening is in communication with the medium channel; and
   a shielding member, connected to the main body part so as to seal the opening.

2. The hot management component according to claim 1, wherein the multiple connecting regions comprise a first connecting region, a second connecting region, and a third connecting region, wherein the first connecting region and the third connecting region are arranged opposite to each other, and the second connecting region connects the first connecting region and the third connecting region.

3. The hot management component according to claim 1 or 2, wherein adjacent two connecting regions are mutually perpendicular.

4. The hot management component according to any one of claims 1 to 3, wherein the main body part is provided with an outer surface, the opening is provided on the outer surface, and the shielding member fits onto the outer surface.

5. The hot management component according to claim 4, wherein a width of a portion of the shielding member that extends beyond an edge of the opening is denoted as $D_1$, which satisfies $6mm \leq D_1 \leq 15mm$.

6. The hot management component according to any one of claims 1 to 5, wherein along a thickness direction of the connecting regions, a size of a portion of the medium channel located within the connecting regions is denoted as $D_2$; and
   along a thickness direction of the corner region, a portion of the medium channel located within the corner region is provided with a first inner sidewall and a second inner sidewall facing with each other;

the opening passes through the first inner sidewall, and a distance between the shielding member and the second inner sidewall is denoted as $D_3$, satisfying

$$D_3 \geq D_2.$$

7. The hot management component according to claim 6, wherein $2mm \leq D_2 \leq 3mm$.

8. The hot management component according to claim 6 or 7, wherein $2mm \leq D_3 \leq 4mm$.

9. A battery, comprising

a box;
a battery cell housed within the box; and
the hot management component according to any one of claims 1 to 8, wherein the hot management component is arranged in the box, the battery cell is arranged in the accommodating space, and the hot management component is configured to manage a temperature of the battery cell.

10. An electric device, comprising the battery according to claim 9, wherein the battery is configured to provide electrical energy.

11. A manufacturing method of a hot management component, wherein the manufacturing method of the hot management component comprises

providing a main body part, wherein the main body part is bent to form multiple connecting regions, and the multiple connecting regions are connected sequentially to form an accommodating space for accommodating battery cells; a connection position of two adjacent connecting regions forms a corner region, and an interior of the main body part is provided with a medium channel passing through the corner region; an opening is provided at a position corresponding to the medium channel on a side of the corner region away from the accommodating space; the opening is in communication with the medium channel;
providing a shielding member; and
connecting the shielding member to the main body part so as to seal the opening.

12. The manufacturing method of the hot management component according to claim 11, wherein the step of providing a main body part comprises

providing a composite sheet, wherein an interior of the composite sheet forms the medium channel;

arranging the opening on one side of the composite sheet in communication with the medium channel; and
bending the composite sheet to form the main body part.

13. The manufacturing method of the hot management component according to claim 12, wherein the providing a composite sheet comprises

providing two sheets;
stacking the two sheets and arranging a rolling inhibitor between the two sheets;
hot rolling the two sheets to form a hot-rolled sheet; and
expanding the hot-rolled sheet, so as to enable the hot-rolled sheet to form the medium channel at a position where the rolling inhibitor is arranged, to form the composite sheet.

1000

FIG.1

100

FIG. 2

FIG. 3

FIG. 4

FIG. 5

FIG. 6

FIG. 7

providing a main body part — S100

providing the shielding member — S200

connecting the shielding member to the main body part so as to enable the shielding member to seal the opening — S300

FIG. 8

31

FIG. 9

FIG. 10

318

FIG. 11

318

FIG. 12

318

FIG. 13

| | |
|---|---|
| providing two sheets | S111 |

↓

| | |
|---|---|
| stacking the two sheets and arranging a rolling inhibitor between the two sheets | S112 |

↓

| | |
|---|---|
| hot rolling the two sheets to form a hot-rolled sheet | S113 |

↓

| | |
|---|---|
| expanding the hot-rolled sheet, enabling the hot-rolled sheet to form a medium channel at the position where the rolling inhibitor is arranged, to form a composite sheet | S114 |

S110

FIG. 14

3182

3182a

3182a

FIG. 15

## INTERNATIONAL SEARCH REPORT

| | International application No. |
|---|---|
| | **PCT/CN2022/111492** |

**A.    CLASSIFICATION OF SUBJECT MATTER**

B21D 53/02(2006.01)i;  B23P 15/26(2006.01)i

According to International Patent Classification (IPC) or to both national classification and IPC

**B.    FIELDS SEARCHED**

Minimum documentation searched (classification system followed by classification symbols)

B21D,B23P

Documentation searched other than minimum documentation to the extent that such documents are included in the fields searched

Electronic data base consulted during the international search (name of data base and, where practicable, search terms used)

CNPAT, DWPI, CNTXT, CNKI: 折弯, 弯折, 拐角 , 弯曲, 折叠, 开口, 切口, 孔, 洞, 槽, 遮, 挡, 封, 盖, 流道, 通道, 热管, 热交换, 散热, 冷却, bend, corner, open+, hole, groove, seal+, block, lid, cover, channel, heat, dissipat+, radiat+, reject+, cool+

**C.    DOCUMENTS CONSIDERED TO BE RELEVANT**

| Category* | Citation of document, with indication, where appropriate, of the relevant passages | Relevant to claim No. |
|---|---|---|
| A | CN 209926945 U (CHANGZHOU HENGCHUANG THERMAL MANAGEMENT CO., LTD.) 10 January 2020 (2020-01-10) <br> description, paragraphs 6-28, and figure 2 | 1-13 |
| A | CN 113857798 A (CHANGZHOU HENGCHUANG THERMAL MANAGEMENT CO., LTD.) 31 December 2021 (2021-12-31) <br> entire document | 1-13 |
| A | CN 111542202 A (SOUTH CHINA UNIVERSITY OF TECHNOLOGY) 14 August 2020 (2020-08-14) <br> entire document | 1-13 |
| A | CN 203823418 U (SICHUAN CHANGHONG JIJIA PRECISION INDUSTRY CO., LTD.) 10 September 2014 (2014-09-10) <br> entire document | 1-13 |
| A | JP 2008008598 A (CALSONIC KANSEI CORP.) 17 January 2008 (2008-01-17) <br> entire document | 1-13 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **19 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/111492**

| Patent document cited in search report | | | Publication date (day/month/year) | Patent family member(s) | Publication date (day/month/year) |
|---|---|---|---|---|---|
| CN | 209926945 | U | 10 January 2020 | None | |
| CN | 113857798 | A | 31 December 2021 | None | |
| CN | 111542202 | A | 14 August 2020 | None | |
| CN | 203823418 | U | 10 September 2014 | None | |
| JP | 2008008598 | A | 17 January 2008 | None | |

Form PCT/ISA/210 (patent family annex) (January 2015)